# EUROPÄISCHE PATENTSCHRIFT

(11) **EP 0 633 409 B1**
(45) Veröffentlichungstag und Bekanntmachung des Hinweises auf die Patenterteilung: **07.05.1997**
(21) Anmeldenummer: 94110285.7
(22) Anmeldetag: 01.07.1994
(51) Int. Cl.: F16G 13/06, B41F 13/03

(54) **Rollenkette**
Roller chain
Chaîne à rouleaux

(30) Priorität: 09.07.1993 DE 4322929
(43) Veröffentlichungstag der Anmeldung: 11.01.1995
(73) Patentinhaber: KOENIG & BAUER-ALBERT AKTIENGESELLSCHAFT, 97080 Würzburg (DE)
(72) Erfinder: Lehrieder, Erwin Paul Josef, D-97253 Gaukönigshofen (DE); Mezger, Franz Konrad, D-97922 Lauda/Königshofen (DE)

(56) Entgegenhaltungen:
- DE-A- 1 930 628
- DE-A- 3 048 797
- FR-A- 844 470
- GB-A- 1 083 379

## Beschreibung

Die Erfindung betrifft eine Rollenkette entsprechend dem Oberbegriff des Patentanspruches 1.

Eine gattungsgemäße Rollenkette ist durch die GB-A-10 83 379 bekannt geworden. Diese Rollenkette verwendet Laschen aus federndem Material, die jeweils zwischen zwei Laufrollen auf Bolzen gelagert sind. Die Laschen sind blattfederartig ausgestaltet.

Durch die DE 30 48 792 C2 ist eine Rollenkette, insbesondere zum Einziehen von Materialbahnen in Rollenrotationsdruckmaschinen bekanntgeworden, welche aus in einem Abstand zueinander angeordneten parallel zueinander verlaufenden Laschen oder Stäbchen besteht, welche über Achsen mit darauf angeordneten Rollen gelenkig miteinander verbunden sind, wobei die Rollenkette auch in Richtung einer z-Achse verwindbar ist.

Nachteilig bei dieser Rollenkette ist, daß diese beim Durchlaufen einer dreidimensionalen Kurve, so wie dies beim Einziehen einer Papierbahn um eine Wendestange bis hin zu den Trichtern erforderlich ist, nur mit großem Kraftaufwand verwindbar ist. Dieser Kraftaufwand resultiert zum Einen aus der Überwindung eines großen Widerstandsmomentes, welches von zwei zueinander in Laufrichtung parallel verlaufenden Laschen oder Stäbchen resultiert und zum Anderen aus den im Querschnitt der Rollenkette gesehen, herausragenden Achsen. Beide Faktoren führen zu einem relativ hohen Reibungswiderstand in der seitengestellfesten Führungsbahn der Rollenkette beim Durchlaufen einer dreidimensionalen Kurve.

Der Erfindung liegt die Aufgabe zugrunde, eine leichte Rollenkette zum Einziehen einer Materialbahn zu schaffen, die trotz der Verwendung von Laschen eine gute räumliche Bewegbarkeit aufweist.

Erfindungsgemäß wird diese Aufgabe entsprechend den Merkmalen des kennzeichnenden Teils des Patentanspruches 1 gelöst.

Durch die Erfindung treten insbesondere nachfolgende Vorteile ein: Infolge des Einsatzes von mindestens einer blattfederartigen Lasche zwischen den jeweils auf einem Bolzen angeordneten Rollenpaaren ist es möglich geworden, in der z-Achsenrichtung ein geringes Biegemoment zu erhalten, was eine leichte Kurvengängigkeit einer eine Papierbahn führende, angetriebene endliche Rollenkette vom Rollenwechsler durch die Druckeinheiten hindurch und um die Wendestangen ermöglicht. Durch eine besondere Ausbildung der Laufrollen, nämlich einem Anschrägen auf den den blattfederartigen Laschen zugewandten Seitenflächen wird eine besonders hohe Beweglichkeit der blattfederartigen Lasche in der z-Achsenrichtung ermöglicht. Infolgedessen, daß aus dem Querschnitt der Laufrollen herausragende Verbindungselemente vermieden worden sind, wird auch hierdurch die Reibung in der Führung der Rollenkette minimiert. Die Erfindung wird nachfolgend an mehreren Ausführungsbeispielen näher erläutert. Die zugehörigen Zeichnungen zeigen in
- Fig. 1: eine Vorderansicht einer vergrößert dargestellten erfindungsgemäßen Rollenkette,
- Fig. 2: die Draufsicht nach Fig. 1,
- Fig. 3: einen Schnitt III - III nach Fig. 1 mit einem zweiten Ausführungsbeispiel der Ausbildung einer Laufrolle,
- Fig. 4: die Vorderansicht einer blattfederartigen Lasche,
- Fig. 5: eine Vorderansicht eines weiteren Ausführungsbeispiel einer blattfederartigen Lasche,
- Fig. 6: eine Draufsicht nach Fig. 1 mit der Darstellung eines weiteren Ausführungsbeispieles einer blattfederartigen Lasche,
- Fig. 7: einen Schnitt VII - VII nach Fig. 1 mit einem weiteren Ausführungsbeispiel eines Bolzens.

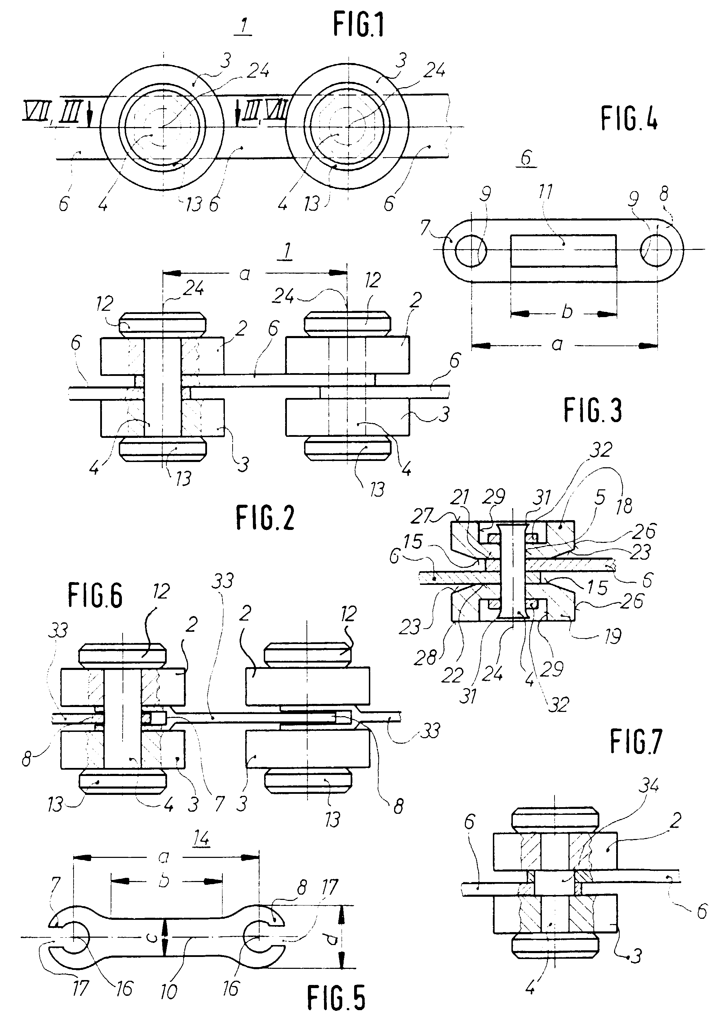

In Fig. 1 und Fig. 2 wird eine insgesamt mit 1 bezeichneter Teil einer Rollenkette gezeigt, welche jeweils ein aus zwei Laufrollen 2, 3 bestehendes Laufrollenpaar 2, 3 aufweist, das auf einem Bolzen 4 drehbar angeordnet ist. Dazu weisen die Laufrollen 2, 3 zentrisch jeweils eine Bohrung 5 auf. Die Bolzen 4 der Laufrollenpaare 2, 3 sind jeweils durch eine blattfederartige Lasche, oder anders ausgedrückt, eine Lasche 6 mit Blattfederwirkung, miteinander verbunden. Die blattfederartigen Laschen 6 überlappen sich dabei jeweils mit ihren Enden 7, 8 auf einem Bolzen 4. Die blattfederartigen Laschen 6 sind auf dem Bolzen 4 zwischen den Laufrollen 2, 3 angeordnet. Jede blattfederartige Lasche 6 kann an ihren beiden Enden 7, 8 abgerundet sein und weist an jedem ihrer Enden 7, 8 eine Lagerbohrung 9 zur Aufnahme des Bolzens 4 auf. Die Lagerbohrungen 9 sind je Lasche 6 in einem Abstand a zueinander angeordnet. Zwischen den zwei Lagerbohrungen 9 kann in Richtung ihrer Längsachse 10 eine Aussparung 11, z. B. in rechteckiger Form zwecks Reduzierung des Querschnittes, vorgesehen sein, welche sich zwischen den Lagerbohrungen 9 befindet, z. B. mit einer Länge b. Die Länge b beträgt vorzugsweise die Hälfte des Abstandes a. Der Bolzen 4 kann jeweils aus einem zweiteiligen Niet mit einem Setzkopf 12 und einem Schließkopf 13 bestehen (Fig. 1, Fig. 2). Koaxial zu dem genannten Niet kann auch eine nicht dargestellte Hülse angeordnet sein, welche als Distanzstück dient, gegenüber beiden Köpfen des zweiteiligen Nietes. Der Bolzen 4 kann auch als Schraubenbolzen ausgeführt und mit einer Mutter sowie einem Sicherungselement versehen sein. Es ist auch möglich, den Bolzen 4 rohrförmig auszubilden und an seinen beiden Enden aufzuweiten, nachdem die Laufrollen 2, 3 bzw. 18, 19 sowie die Enden 7, 8 verschiedener Laschen 6 auf diesem angeordnet sind. Vor dem Aufweiten wird auf beiden Enden des rohrförmigen Bolzens 4 jeweils eine Anlaufscheibe 32 angeordnet (Fig. 3). Weiterhin ist es auch möglich, die beiden Enden des Bolzens 4 zu quetschen, um die Laufrollen 2, 3 darauf unverlierbar anzuordnen.

In Fig. 5 ist ein weiteres Ausführungsbeispiel einer blattfederartigen Lasche 14 gezeigt. Diese blattfederartige Lasche 14 weist ebenfalls in einem Abstand a angeordnete Lagerbohrungen 16 zur Aufnahme eines Bolzens 4 auf, wobei die Lagerbohrungen 16 der blattfederartigen Lasche 14 in Richtung ihrer Enden 7, 8 in einseitig offene Schlitze 17 münden. Diese Schlitze 17 weisen gegenüber dem Durchmesser der Lagerbohrungen 16 eine geringere Breite auf und wirken somit als Überlastsicherung gegen erhöhte Zugspannung in der Rollenkette 1. Darüberhinaus kann die blattfederartige Lasche 14 auf eine Länge b eine Breite c mit reduziertem Querschnitt aufweisen, die gegenüber der gesamten Breite d der blattfederartigen Lasche 14 nur ca. das 0,5 bis 0,7-fache beträgt.

In Fig. 3 ist ein zweites Ausführungsbeispiel der Ausbildung einer Laufrolle 18, 19 gezeigt.

Diese Laufrollen 18, 19 weisen jeweils an ihren den blattfederartigen Laschen 6 zugewandten ersten Seitenflächen 21, 22 eine Abschrägung 23 auf, welche von der Lauffläche 26 in Richtung einer Rotationsachse 24 verläuft. Dabei ist es günstig, wenn die ersten Seitenflächen 21, 22 der Laufrollen 18, 19 in der Nähe ihrer Rotationsachse 24 jeweils noch eine Fläche 15 aufweisen, an welcher beide blattfederartigen Laschen 6 anliegen, um den blattfederartigen Laschen 6 eine bessere Führung zu geben. Infolge der die Laufflächen 26 vermindernden Abschrägungen 23 ist es möglich geworden, die blattfederartigen Laschen 6, 14 zwischen den Bolzen 4 noch besser in Richtung einer z-Achse, welche parallel zur Rotationsachse 24 des Bolzens 4 verläuft, auszulenken. Nach dem bevorzugten zweiten Ausführungsbeispiel der Ausbildung der Laufrollen 18, 19 ist weiterhin möglich, auf der den blattfederartigen Laschen 6, 14 abgewandten zweiten Seitenfläche 27, 28 der Laufrollen 18, 19 jeweils eine Vertiefung 29 einzubringen, um die bereits vorgenannten Sicherungsmittel 31, wie aufgeweitet rohrförmige Enden, Köpfe von zweiteiligen Nieten von dem Bolzen 4 so unterzubringen, daß diese nicht aus der Silhouette in Laufrichtung der Rollenkette 1 gesehen, heraustreten. Die blattfederartigen Laschen 6, 14 können z. B. aus Federstahlblech, aus glasfaserverstärktem Kunststoff oder aus dgl. Material bestehen. Die blattfederartigen Laschen 6, 14, 33 können z. B. aus Federstahl bestehen mit einem Gleitmodul G = 81,5 kN/mm² und mit einem Elastizitätsmodul E = 206 kN/mm². Weiterhin können die blattfederartigen Laschen 6, 14 aus Kunststoff, z. B. Polyäthylen oder auch z. B. aus Polyamid 6 mit beispielsweise 30% Glasfaseranteil bestehen, bei einem Elastizitätsmodul E = 8500 kN/mm². Die Laufrollen 2, 3; 18, 19 können ebenfalls aus einem Kunststoff, z. B. Polyamid bestehen.

Entsprechend der Darstellung in Fig. 6 ist eine Draufsicht nach Fig. 1 gezeigt mit einer blattfederartigen Lasche 33, welche an ihrem einen Ende 7 gabelförmig ausgebildet ist, in welches ein zweites Ende 8 einer nächsten blattfederartigen Lasche 33 eingreift. Dies hat den Vorteil, daß die von den blattfederartigen Laschen 33 auf den Bolzen 4 übertragenen Schub- oder Zugkräfte absolut mittig auf den Bolzen 4 übertragen werden und ein Schrägstellen desselben aus diesem Grunde entfällt.

In Fig. 7 ist ein Schnitt VII - VII dargestellt mit einem weiteren Ausführungsbeispiel eines Bolzens 4. Der Bolzen 4 weist mittig einen Bund 34 auf, auf welchem die blattfederartigen Laschen 6 mit ihren Lagerbohrungen sitzen. Dadurch wird die Reibung der blattfederartigen Laschen 6 vermindert.

### Teileliste

- 1: Rollenkette
- 2: Laufrolle (1)
- 3: Laufrolle (1)
- 4: Bolzen (1)
- 5: Bohrung (2, 3)
- 6: Lasche, blattfederartig
- 7: Ende (6, 14, 33)
- 8: Ende (6, 14, 33)
- 9: Lagerbohrung (6, 14)
- 10: Längsachse (6, 14)
- 11: Aussparung (6)
- 12: Setzkopf (4)
- 13: Schließkopf (4)
- 14: Lasche, blattfederartig
- 15: Fläche (21, 22)
- 16: Lagerbohrung (14)
- 17: Schlitz (14)
- 18: Laufrolle
- 19: Laufrolle
- 20: -
- 21: Seitenfläche, erste (18)
- 22: Seitenfläche, erste (19)
- 23: Abschrägung (18, 19)
- 24: Rotationsachse (18, 19)
- 25: -
- 26: Lauffläche (18, 19)
- 27: Seitenfläche, zweite (18)
- 28: Seitenfläche, zweite (19)
- 29: Vertiefung (18, 19)
- 30: -
- 31: Sicherungsmittel (4)
- 32: Anlaufscheibe
- 33: Lasche, blattfederartig
- 34: Bund

- a: Abstand (4, 9, 16)
- b: Länge (11)
- c: Breite, vermindert (14)
- d: Breite (14)

## Patentansprüche

1. Rollenkette unter Verwendung von Laschen (6, 14, 33) und Bolzen (4), wobei auf den Bolzen (4) sowohl Laufrollen (2, 3; 18; 19) als auch die an ihren Enden (7, 8) mit Lagerbohrungen (9) versehenen Laschen (6, 14, 33) gelagert sind, wobei die Laufrollen (2, 3; 18, 19) jeweils paarweise auf dem Bolzen (4) gelagert sind, daß jeweils zwei benachbarte beabstandete Paare von Laufrollen (2, 3; 18, 19) mittels mindestens einer zwischen den Laufrollen (2, 3; 18, 19) angeordneten, blattfederartigen Lasche (6; 14; 33) verbunden sind, dadurch gekennzeichnet, daß die Laschen (6; 14; 32) an ihrem ersten Ende (7) gabelförmig und an ihrem zweiten Ende (8) flach ausgeführt sind, daß jeweils das zweite flache Ende (8) im gabelförmigen Ende (7) des nächsten Paares von Laufrollen (2, 3; 18; 19) auf dem Bolzen (4) gelagert ist.

2. Rollenkette nach Patentanspruch 1, dadurch gekennzeichnet, daß die Lasche (6; 14; 33) eine sich in ihrer Längsachsenrichtung (10) erstreckende Aussparung (11) aufweist.

3. Rollenkette nach den Patentansprüchen 1 und 2, dadurch gekennzeichnet, daß zwischen der Lagerbohrung (9; 16) der Lasche (6; 14) in Richtung der Enden (7, 8) der Lasche (6; 14) ein einseitig offener Schlitz (17) vorgesehen ist, der eine geringere Breite gegenüber dem Durchmesser der Lagerbohrung (16) aufweist.

## Claims

1. A roller chain using plates (6, 14, 33) and pins (4), there being mounted on the pins (4) both rollers (2, 3; 18, 19) and the plates (6, 14, 33), which are provided with bearing bores (9) at their ends (7, 8), the rollers (2, 3; 18, 19) being mounted in each case in pairs on the pin (4), that in each case two adjacent spaced pairs of rollers (2, 3; 18, 19) are connected by means of at least one plate (6; 14; 33) of the leaf-spring type arranged between the rollers (2, 3; 18, 19), characterized in that the plates (6; 14; 32) are constructed to be fork-shaped at their first end (7) and flat at their second end (8), and in that in each case the second, flat end (8) is mounted in the fork-shaped end (7) of the next pair of rollers (2, 3; 18; 19) on the pin (4).

2. A roller chain according to claim 1, characterized in that the plate (6; 14; 33) has a cutout (11) extending in the direction (10) of its longitudinal axis.

3. A roller chain according to Claims 1 and 2, characterized in that provided between the bearing bore (9; 16) in the plate (6; 14), in the direction of the ends (7, 8) of the plate (6; 14), is a slot (17) which is open at one side and which has a width which is smaller than the diameter of the bearing bore (16).

## Revendications

1. Chaîne à rouleaux comportant des attaches (6, 14, 33) et des axes (4), dans laquelle aussi bien des roulettes (2, 3 ; 18 ; 19) que les attaches (6, 14, 33) munies d'alésages de roulement (9) à leurs extrémités (7, 8) sont logées sur les axes (4), les roulettes (2, 3 ; 18, 19) étant logées à chaque fois par paires sur l'axe (4) de telle sorte que, à chaque fois, deux paires voisines et distantes de roulettes (2, 3 ; 18, 19) sont liées au moyen d'au moins une attache (6 ; 14 ; 33) semblable à un ressort à lames et agencée entre les roulettes (2, 3 ; 18, 19), caractérisée en ce que les attaches (6 ; 14 ; 32) sont construites avec une première extrémité fourchue (7) et avec une seconde extrémité plate (8) et, à chaque fois, la seconde extrémité plate (8) est logée sur l'axe (4) dans l'extrémité fourchue (7) de la paire suivante de roulettes (2, 3 ; 18 ; 19).

2. Chaîne à rouleaux selon la revendication 1, caractérisée en ce que l'attache (6 ; 14 ; 33) comporte un évidement (11) qui s'étend dans le sens de son axe longitudinal (10).

3. Chaîne à rouleaux selon les revendications 1 et 2, caractérisée en ce qu'une fente (17) ouverte d'un côté est prévue au niveau de l'alésage de roulement (9 ; 16) de l'attache (6 ; 14) en direction des extrémités (7, 8) de l'attache (6 ; 14), laquelle fente a une largeur plus petite que le diamètre de l'alésage de roulement (16).
